**Europäisches Patentamt**

**European Patent Office**

**Office européen des brevets**

(19)

(11) Numéro de publication : **0 333 571 B1**

(12) **FASCICULE DE BREVET EUROPEEN**

(45) Date de publication du fascicule du brevet :
23.06.93 Bulletin 93/25

(51) Int. Cl.⁵ : **H01H 37/00, G05D 23/275**

(21) Numéro de dépôt : **89400688.1**

(22) Date de dépôt : **13.03.89**

(54) **Dispositif de commande de mises en service successives de charges.**

(30) Priorité : **15.03.88 FR 8803326**

(43) Date de publication de la demande :
**20.09.89 Bulletin 89/38**

(45) Mention de la délivrance du brevet :
**23.06.93 Bulletin 93/25**

(84) Etats contractants désignés :
**DE ES GB IT**

(56) Documents cités :
**FR-A- 2 397 057
US-A- 4 041 360
US-A- 4 325 047
US-A- 4 414 524**

(73) Titulaire : **JAEGER
2, rue Baudin
F-92303 Levallois-Perret (FR)**

(72) Inventeur : **Bernard, Alain
105, avenue de Paris
F-94160 Saint-Mande (FR)**
Inventeur : **Eisenberger, Benjamin
13, avenue Engrand
F-78600 Maisons-Laffitte (FR)**

(74) Mandataire : **Martin, Jean-Jacques et al
Cabinet REGIMBEAU 26, Avenue Kléber
F-75116 Paris (FR)**

EP 0 333 571 B1

Jouve, 18, rue Saint-Denis, 75001 PARIS

## Description

La présente invention concerne le domaine des dispositifs de commande de mises en service successives de plusieurs charges, lors de l'apparition d'événements respectivement associés de priorités ordonnées.

Le document US-A-4041360 décrit un dispositif de commande d'un moteur électrique comprenant trois bobinages connectés en série et conçus pour permettre trois vitesses de rotation du moteur. Ce dispositif de commande comprend un circuit d'alimentation électrique à deux bornes, deux organes capteurs sensibles respectivement au franchissement de deux seuils de température respectifs, un interrupteur et un premier inverseur pilotés respectivement par les deux organes capteurs et un relais comportant un second inverseur, dont la bobine est commandée par l'interrupteur. La bobine du relais est reliée en série de l'interrupteur entre les deux bornes du circuit d'alimentation. Le premier inverseur a son entrée reliée à une première borne d'alimentation, une première sortie reliée à un point commun au premier et au second bobinages et une seconde sortie reliée à l'entrée du second inverseur. Ce second inverseur a une première sortie reliée à un point commun au second et au troisième bobinages et une seconde sortie reliée en extrémité du troisième bobinage. Par ailleurs, le premier bobinage a son extrémité reliée à la seconde borne d'alimentation. Lorsque la température est supérieure aux deux seuils, l'interrupteur est fermé et la bobine du relais est donc alimentée, le premier inverseur a son entrée reliée à sa première sortie et le second inverseur a son entrée reliée à sa première sortie, comme représenté sur la figure 1 de ce document ; le premier bobinage est alimenté. Lorsque la température franchit par défaut un premier seuil, le premier inverseur est basculé et a son entrée reliée à sa seconde sortie comme représenté sur la figure 2 de ce document ; le premier et le second bobinages sont alimentés simultanément en série. Lorsque la température franchit par défaut le second seuil, l'interrupteur s'ouvre ; la bobine du relais n'est alors plus alimentée et le second inverseur bascule ; il a son entrée reliée à sa seconde sortie ; les trois bobinages sont alors alimentés simultanément en série comme représenté sur la figure 3 de ce document.

La présente invention trouve application, en particulier mais non exclusivement, pour la commande directe de deux systèmes de régulation thermique, à des températures décalées, sans recouvrement des états actifs desdits systèmes.

Un exemple précis d'application de la présente invention réside dans la commande des moto-ventilateurs de régulation thermique de radiateurs d'automobiles, dans le cas où l'on recherche deux régimes de refroidissement.

La présente invention a pour but de garantir que dès qu'une température minimale est détectée, l'une et une seule des charges (par exemple l'un et un seul des moto-ventilateurs de régulation thermique dans l'exemple précité) est mise en service ; c'est-à-dire qu'à partir du moment où la température minimale est détectée l'une des charges est alimentée, sans qu'à aucun moment il y ait alimentation simultanée de deux charges, ni absence d'alimentation d'au moins une charge.

Les dispositifs de commande jusqu'ici proposés ne donnent aucunement satisfaction sur ce point.

La présente invention vient améliorer la situation en proposant un dispositif de commande de mises en service successives de plusieurs charges, lors de l'apparition d'événements associés de priorités ordonnées, du type connu comprenant :

- un circuit d'alimentation électrique à deux bornes ,
- plusieurs organes capteurs sensibles respectivement à l'un des événements,
- un interrupteur commuté par un organe capteur associé lors de la détection d'un événement de plus faible priorité,
- au moins un inverseur à une entrée et deux sorties, dont l'entrée est reliée à une première sortie en position de repos et à la seconde sortie en position de travail, dont l'état est commuté de la position de repos à la position de travail par un organe capteur lors de la détection d'un événement associé,

caractérisé par le fait que :

- il comprend N organes capteurs pour la mise en service de N charges, sans recouvrement,
- une première charge est reliée entre une première borne de l'interrupteur et une première borne de l'alimentation,
- l'interrupteur est ouvert au repos et adapté pour être fermé lors de la détection de l'événement de plus faible priorité par l'organe capteur associé pour assurer la mise en service de la dite première charge correspondante
- il comprend N - 1 inverseurs dont l'état est commuté de la position de repos à la position de travail par les N - 1 autres organes capteurs lors de la détection d'événements respectivement associés,
- la connexion des N - 1 inverseurs étant telle que
  . chaque charge associée à un inverseur est reliée entre la seconde sortie de cet inverseur et la première borne de l'alimentation,
  . la première sortie de l'inverseur associé à l'organe capteur détectant l'événement de seconde priorité est reliée à la seconde borne de l'interrupteur tandis que la première sortie de chaque inverseur associé à un organe capteur détectant un événement de priorité supérieure, s'il en existe, est reliée à l'entrée d'un inverseur associé à l'organe capteur détectant l'événement de priorité respectivement inférieure, et que

. l'entrée de l'inverseur associé à l'organe capteur détectant l'événement de plus forte priorité est reliée à la seconde borne de l'alimentation.

Comme cela sera explicité par la suite l'interrupteur garantit la mise en service de la charge associée dès que l'événement de plus faible priorité est détecté par l'organe capteur associé. De plus, le ou les inverseur(s) assure(nt) la mise en service successive de la ou des autre(s) charge(s), tout en interrompant simultanément la mise en service de la charge antérieure concernée, au fur et à mesure de la détection des événements par les organes capteurs associés.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente représente une vue schématique en position de repos d'un dispositif de commande conforme à une première variante de réalisation de la présente invention,
- la figure 2 représente une vue du même dispositif après détection d'un événement de plus faible priorité,
- la figure 3 représente une vue similaire du même dispositif après détection d'un événement de seconde priorité,
- la figure 4 représente un schéma illustrant la mise en service des différentes charges, et,
- la figure 5 représente une vue schématique en position de repos d'un dispositif conforme à une seconde variante de réalisation de la présente invention.

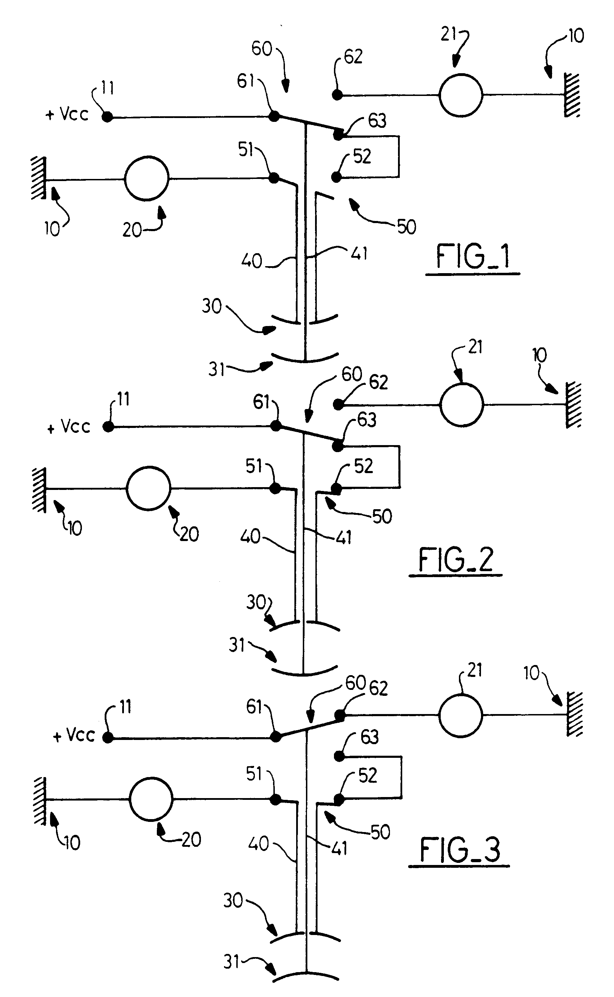

On va maintenant décrire le mode de réalisation du dispositif de commande conforme à la présente invention, illustré sur les figures 1 à 3 annexées, dans le cadre d'une application, préférentielle mais non limitative, à la commande des moto-ventilateurs de régulation thermique des radiateurs d'automobiles.

Le dispositif illustré sur les figures 1 à 3 est conçu pour permettre deux régimes de refroidissement en fonction de la température détectée. A cet effet, le dispositif comprend deux moto-ventilateurs 20, 21, de forçage du refroidissement du moteur automobile, travaillant à des vitesses différentes, ou encore deux enroulements 20, 21 d'un même moteur remplissant une fonction équivalente.

Le dispositif de commande illustré sur les figures 1 à 3 comprend par ailleurs un circuit d'alimentation électrique, deux organes capteurs 30, 31, un interrupteur 50 et un inverseur 60.

Le circuit d'alimentation électrique comprend deux bornes 10, 11 correspondant arbitrairement pour la première borne 10 à la masse, pour la seconde borne 11 à un potentiel positif +Vcc. En variante la première borne 10 du circuit d'alimentation électrique pourrait correspondre au potentiel positif +Vcc alors que la seconde borne 11 correspondrait à la masse.

Les organes capteurs 30, 31, sont formés de rondelles cloquantes thermosensibles conçues pour cloquer à des températures décalées. En l'espèce, la première rondelle cloquante 30 est conçue pour cloquer à une température T1. La seconde rondelle cloquante 31 est conçue pour cloquer à une température T2 supérieure à la température T1.

L'interrupteur 50 est ouvert au repos. Il est adapté pour être fermé lors de la détection de la température T1 par la rondelle cloquante 30 associée. A cet effet, l'interrupteur 50 est relié fonctionnellement à la rondelle cloquante 30 par l'intermédiaire d'un piston 40.

l'inverseur 60 possède une entrée 61 et deux sorties 62, 63. En position de repos, comme illustré sur la figure 1, l'entrée 61 est reliée à une première sortie 63, tandis qu'en position de travail, comme illustré sur la figure 3, l'entrée 61 est reliée à la seconde sortie 62. La commutation de l'inverseur 60 de la position de repos à la position de travail est commandée par la rondelle cloquante 31 associée, lors de la détection de la température T2. A cet effet, l'inverseur 60 est relié fonctionnellement à la rondelle cloquante 31 par l'intermédiaire d'un piston 41.

De préférence, pour minimiser l'encombrement du dispositif, le piston 41 s'étend coaxialement à l'intérieur du piston 40 précité.

La première charge 20 est reliée entre la première borne 10 de l'alimentation électrique et la première borne 51 de l'interrupteur 50. La seconde borne 52 de l'interrupteur 50 est reliée à la première sortie 63 de l'inverseur 60. L'entrée 61 de l'inverseur 60 est reliée à la seconde borne 11 de l'alimentation électrique. La seconde charge 21 est reliée entre la seconde sortie 62 de l'inverseur 60 et la première borne 10 de l'alimentation électrique.

Ainsi, comme cela est représenté sur la figure 1, en position de repos lorsque la température est inférieure aux températures de cloquage T1 et T2 des deux rondelles cloquantes 30, 31, aucun des moteurs 20, 21 n'est alimenté.

Comme illustré sur la figure 2, lorsque la température est comprise entre les températures T1 et T2 précitées, la première rondelle cloquante 30 se déforme. L'interrupteur 50 est alors fermé. Le premier moteur 20 est donc mis en service.

Si la température décroit et tombe en dessous de T1 (ou T'1 en cas d'hystérésis) la rondelle 30 se décloque. L'interrupteur 50 redevient ouvert et l'alimentation du moteur 20 est interrompue.

Si par contre, la température continue à croître et devient supérieure à la température T2, comme illustré sur la figure 3, la rondelle 31 cloque à son tour. L'inverseur 60 bascule alors en position de travail. De ce fait, on obtient simultanément l'interruption de l'alimentation du premier moteur 20 (bien que la rondelle 30 reste cloquée) et la mise en service du second moteur 21. L'état des circuits électriques alors obtenu est illustré sur la figure 3.

Lorsque la température redescend en dessous de T2 (ou T'2 en cas d'hystérésis), la rondelle 31 de décloque. L'inverseur 60 repasse alors en position de repos comme illustré sur la figure 2 pour produire simultanément l'interruption de l'alimentation du second moteur 21 et la mise en service du premier moteur 20.

L'homme de l'art comprendra aisément à l'examen des figures 1 à 3 annexées et de la description qui précède que le dispositif de commande conforme à la présente invention permet par conséquent de garantir la mise en service d'un et d'un seul moteur 20 ou 21 dès lors que la température détectée est supérieure à la température minimale T1.

Par ailleurs, la mise en service d'un et d'un seul moteur 20, 21 est garantie quels que soient les phénomènes d'hystérésis définissant les températures de cloquage et de décloquage des rondelles 30 ou 31.

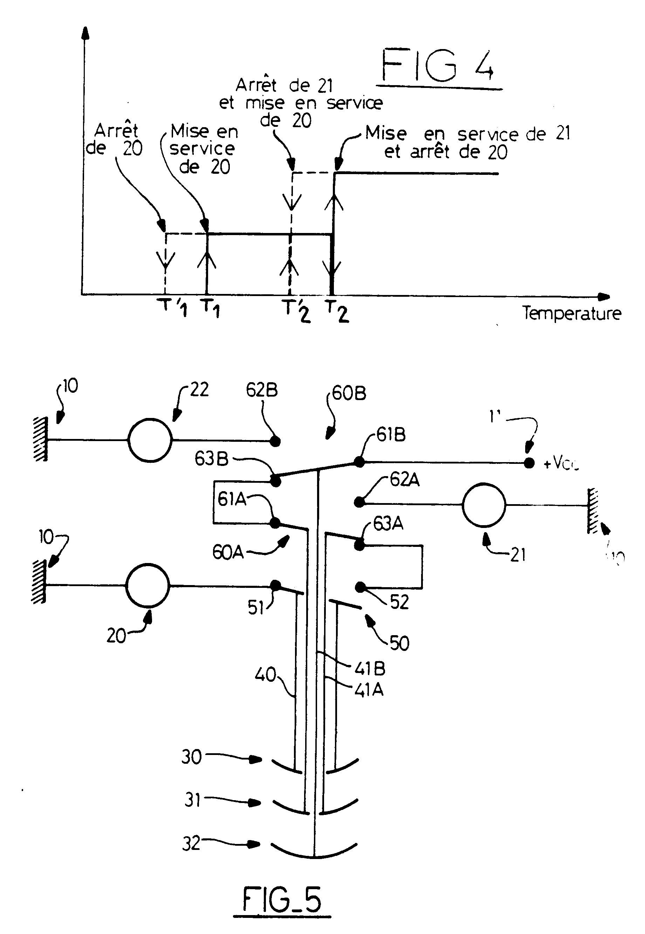

On va maintenant évoquer la seconde variante de réalisation illustrée sur la figure 5 annexée.

Cette variante de réalisation est conçue pour assurer la mise en service successive de N = 3 charges 20, 21, 22.

A cet effet, le dispositif de commande comprend un circuit d'alimentation électrique à deux bornes 10, 11, N = 3 rondelles cloquantes 30, 31, 32 formant organes capteurs, un interrupteur 50, et N - 1 = 2 inverseurs 60A, 60B à une entrée et deux sorties.

L'interrupteur 50 est ouvert au repos. Il est commandé à la fermeture, par l'intermédiaire d'un piston 40, par le cloquage de la rondelle 30 associée.

Au repos, l'entrée 61A, 61B des inverseurs 60A, 60B, est reliée à leur première sortie 63A, 63B. L'entrée 61A, 61B, des inverseurs 60A, 60B, est reliée à leur seconde sortie 62A, 62B par le cloquage des rondelles associées 31, 32, par l'intermédiaire de pistons intercalés 41A, 41B.

On notera que de façon analogue à la disposition illustrée sur les figures 1 à 3, les trois pistons 40, 41A, 41B, utilisés dans le cadre de la variante de réalisation illustrée sur la figure 5, sont coaxiaux pour minimiser l'encombrement du dispositif de commande.

Le premier moteur 20 est relié entre la première borne 10 du circuit d'alimentation et la première borne 51 de l'inverseur 50. La seconde borne 52 de l'interrupteur 50 est reliée à la première sortie 63A de l'inverseur 60A commandée par la rondelle 31 sensible à la seconde température seuil. L'entrée 61A du même inverseur 60A est reliée à la première sortie 63B de l'inverseur 60B commandé par la rondelle 32 sensible à la troisième température seuil. L'entrée 61B de l'inverseur 60B est reliée à la seconde borne d'alimentation 11. Enfin, le second moteur 21 est relié entre la seconde sortie 62A de l'inverseur 60A et la première borne d'alimentation 10, tandis que le troisième moteur 22 est connecté entre la seconde sortie 62B de l'inverseur 60B et la première borne d'alimentation 10.

Ainsi, lorsque la température est inférieure à la première température de cloquage, le dispositif de commande est dans l'état de repos illustré sur la figure 5. Aucun des moteurs 20, 21, 22 n'est alimenté.

Lorsque la première rondelle 30 cloque l'interrupteur 50 se ferme et le premier moteur 20 est alimenté.

Lorsque la seconde rondelle 31 cloque le premier inverseur 60A est commuté en position de travail, ainsi on obtient simultanément l'interruption de l'alimentation du premier moteur 20 et la mise en service du seconde moteur 21.

Enfin, lorsque la troisième rondelle 32 cloque, le deuxième inverseur 60B est commuté en position de travail. Il commande simultanément l'interruption de l'alimentation du second moteur 21 et la mise en service du troisième moteur 22.

Là encore, le dispositif de commande conforme à la présente invention garantit par conséquent qu'à partir du moment où la température est supérieure à la température de cloquage de l'une des rondelles, un et un seul moteur 20, 21 ou 22 est mis en service.

La présente invention n'est pas limitée à la commande de la mise en service successive de deux ou trois charges mais s'étend, d'une façon générale, à la mise en service successive de N charges.

A cet effet, comme indiqué précédemment, le dispositif de commande doit comprendre :

- un circuit d'alimentation électrique à deux bornes 10, 11,
- N organes capteurs 30, 31, 32... sensibles respectivement à l'un des événements à détecter,
- un interrupteur 50 ouvert au repos et adapté pour être fermé lors de la détection de l'événement de plus faible priorité par un organe capteur 30 associé pour assurer la mise en service de la charge correspondante 20 reliée entre une première borne 51 de l'interrupteur et une première borne 10 de l'alimentation,
- N - 1 inverseurs 60 à une entrée et deux sorties 62, 63 dont l'entrée 61 est reliée à une première sortie 63 en position de repos et à la seconde sortie 62 en position de travail, associés respectivement aux N - 1 autres charges 21, 22... et dont l'état est commuté de la position de repos à la position de travail par les N - 1 autres organes capteurs 31, 32... lors de la détection d'événements respectivement associés,
- la connexion des N - 1 inverseurs 60 étant telle que
    . chaque charge 21, 22 associée à un inverseur 60 est reliée entre la seconde sortie 62 de cet inverseur et la première borne 10 de l'alimentation,

. la première sortie 63A de l'inverseur 60A associé à l'organe capteur 31 détectant l'événement de seconde priorité est reliée à la seconde borne 52 de l'interrupteur 50, tandis que la première sortie 63B de chaque inverseur 60B associé à un organe capteur 32 détectant un événement de priorité supérieure, s'il en existe, est reliée à l'entrée 61 de l'inverseur associé à l'organe capteur détectant l'événement de priorité respectivement inférieure, et que

. l'entrée 61B de l'inverseur 60B associé à l'organe capteur 32 détectant l'événement de plus forte priorité est reliée à la seconde borne 11 de l'alimentation.

De préférence, les N organes capteurs, l'interrupteur et les N - 1 inverseurs sont logés dans un boîtier unique.

Bien entendu la présente invention n'est pas limitée aux modes de réalisation particuliers qui viennent d'être décrits mais s'étend à toutes variantes conformes à son esprit.

On notera en particulier que dans le cadre de la présente invention les organes capteurs 30, 31, 32 peuvent être sensibles à des paramètres autres que la température. La nature des paramètres détectés par les différents organes capteurs peut d'ailleurs être différente pour un même dispositif de commande. Les charges 20, 21, 22 peuvent être composées d'autres fonctions électriques que des moteurs. La natures des charges 20, 21, 22 peut d'ailleurs différer pour un même dispositif de commande.

## Revendications

1. Dispositif de commande de mises en service successives de plusieurs charges, lors de l'apparition d'événements associés de priorités ordonnées, du type connu comprenant :
   - un circuit d'alimentation électrique à deux bornes (10, 11) ,
   - plusieurs organes capteurs (30, 31, 32) sensibles respectivement à l'un des événements à détecter
   - un interrupteur (50) commuté par un organe capteur associé (30) lors de la détection d'un événement de plus faible priorité, et
   - au moins un inverseur (60) à une entrée (61) et deux sorties (62,63) dont l'entrée est reliée à une première sortie (63) en position de repos et à la seconde sortie (62) en position de travail, dont l'état est commuté de la position de repos à la position de travail par un organe capteur lors de la détection d'un événement associé,
   caractérisé par le fait que :
   - il comprend N organes capteurs pour la mise en service de N charges, sans recouvrement
   - une première charge (20) est reliée entre une première borne (51) de l'interrupteur (50) et une première borne (10) de l'alimentation,
   - l'interrupteur (50) est ouvert au repos et adapté pour être fermé lors de la détection de l'événement de plus faible priorité par l'organe capteur (30) associé pour assurer la mise en service de la dite première charge correspondante (20)
   - il comprend N - 1 inverseurs (60) dont l'état est commuté de la position de repos à la position de travail par les N - 1 autres organes capteurs (31, 32) lors de la détection d'événements respectivement associés,
   - la connexion des N - 1 inverseurs étant telle que
      . chaque charge (21, 22) associée à un inverseur (60) est reliée entre la seconde sortie (62) de cet inverseur et la première borne (10) de l'alimentation,
      . la première sortie (63A) de l'inverseur (60A) associé à l'organe capteur (31) détectant l'événement de seconde priorité est reliée à la seconde borne (52) de l'interrupteur (50), tandis que la première sortie (63B) de chaque inverseur (60B) associé à un organe capteur (32) détectant un événement de priorité supérieure, s'il en existe, est reliée à l'entrée 61 de l'inverseur associé à l'organe capteur détectant l'événement de priorité respectivement inférieure, et que
      . l'entrée (61B) de l'inverseur (60B) associé à l'organe capteur (32) détectant l'événement de plus forte priorité est reliée à la seconde borne (11) de l'alimentation.

2. Dispositif de commande selon la revendication 1, caractérisé par le fait que certains au moins des organes capteurs (30, 31, 32) sont formés de rondelles cloquantes thermosensibles.

3. Dispositif de commande selon l'une des revendications 1 ou 2, caractérisé par le fait que les organes capteurs (30, 31, 32) sont formés de rondelles cloquantes qui commandent l'interrupteur (50 et les N - 1 inverseurs (60) par l'intermédiaire de pistons (40, 41) concentriques respectifs.

4. Dispositif de commande selon l'une des revendications 1 à 3, caractérisé par le fait que les charges (20, 21, 22) sont formées par des enroulements de moteurs électriques.

5. Dispositif de commande selon l'une des revendications 1 à 4 pour la mise en service successive de deux charges (20, 21) lors de l'apparition de deux événements respectivement associés, caractérisé par le fait qu'il comprend :
   - un circuit d'alimentation électrique à deux bornes (10, 11),
   - deux organes capteurs (30, 31) sensibles respectivement à l'un des événements,
   - un interrupteur (50) ouvert au repos et adapté pour être fermé lors de la détection de l'événement de plus faible priorité par un premier organe capteur associé (30), pour la mise en service de la première charge (20) correspondante reliée entre une première borne (51) de l'interrupteur et une première borne (10) de l'alimentation,
   - un inverseur (60) à une entrée (61) et deux sorties (62, 63), dont l'entrée est reliée à une première sortie (63) en position de repos et à la seconde sortie (62) en position de travail, l'inverseur (60) étant commuté de la position de repos à la position de travail par le second organe capteur (31) lors de la détection d'un événement de deuxième priorité,
   - la connexion de l'inverseur (60) étant telle que :
     . la seconde charge (21) est reliée entre la seconde sortie de l'inverseur (62) et la première borne (10) de l'alimentation,
     . la première sortie (63) de l'inverseur (60) est reliée à la seconde borne (52) de l'interrupteur (50), et
     . l'entrée (61) de l'inverseur (60) est reliée à la seconde borne (11) de l'alimentation.

6. Dispositif de commande selon l'une des revendications 1 à 4 pour la mise en service successive de deux enroulements de moteur électrique lors de l'apparition de deux températures respectivement associées, caractérisé par le fait qu'il comprend :
   - un circuit d'alimentation électrique à deux bornes (10, 11),
   - deux rondelles cloquantes (30, 31) sensibles respectivement à l'une des deux températures,
   - un interrupteur (50) ouvert au repos et adapté pour être fermé lors de la détection de la première température par une première rondelle cloquante (30), pour la mise en service du premier moteur (20) correspondant relié entre une première borne (51) de l'interrupteur et une première borne (10) de l'alimentation,
   - un inverseur (60) à une entrée (61) et deux sorties (62, 63) dont l'entrée (61) est reliée à une première sortie (63) en position de repos, et à la seconde sortie (62) en position de travail, l'inverseur (60) étant commuté de la position de repos à la position de travail par la seconde rondelle cloquante (31) lors de la détection de la température associée, la connection de l'inverseur (60) étant telle que le second moteur (21) est relié entre la seconde sortie (62) de l'inverseur et la première borne (10) de l'alimentation, la première sortie (63) de l'inverseur est reliée à la seconde borne (52) de l'interrupteur et l'entrée (61) de l'inverseur (60) est reliée à la seconde borne (11) de l'alimentation.

7. Dispositif de commande selon l'une des revendications 1 à 4, pour la mise en service successive de trois charges lors de l'apparition de trois événements respectivement associés, caractérisé par le fait qu'il comprend:
   - un circuit d'alimentation électrique à deux bornes (10, 11),
   - trois organes capteurs (30, 31, 32) sensibles respectivement à l'un des événements,
   - un interrupteur (50) ouvert au repos et adapté pour être fermé lors de la détection de l'événement de plus faible priorité par un premier organe capteur associé (30), pour la mise en service de la première charge (20) reliée entre une première borne (51) de l'interrupteur (50) et une première borne (10) de l'alimentation,
   - deux inverseurs (60A, 60B) à une entrée et deux sorties, dont l'entrée (61A, 61B) est reliée à une première sortie (63A, 63B) en position de repos et à la seconde sortie (62A, 62B) en position de travail, chaque inverseur (60A, 60B) étant commuté de la position de repos à la position de travail par un organe capteur (31, 32) respectivement associé lors de la détection d'un événement respectif de deuxième et troisième priorités,
   - la connexion des inverseurs étant telle que :
     . chaque charge (21, 22) associée à un inverseur (60A, 60B) est reliée entre la seconde sortie (62A, 62B) de cet inverseur et la première bonre (10) de l'alimentation,
     . la première sortie (63A) de l'inverseur (60A) associé à l'organe capteur (31) détectant l'événement de seconde priorité est reliée à la seconde borne (52) de l'interrupteur,
     . tandis que la première sortie (63B) de l'inverseur (60B) associé à l'organe capteur (32) détectant l'événement de troisième priorité est reliée à l'entrée (61A) de l'inverseur (60A) associé à l'organe capteur (31) détectant l'événement de priorité inférieure, et que

. l'entrée (61B) de l'inverseur (60B) associé à l'organe capteur (32) détectant l'événement de troisième priorité est reliée à la seconde borne (11) de l'alimentation.

8. Dispositif de commande selon l'une des revendications 1 à 7, caractérisé par le fait que les N organes capteurs, l'interrupteur et les N - 1 inverseurs sont logés dans un boîtier unique.

9. Dispositif de commande selon l'une des revendications 1 à 8, caractérisé par le fait que les N charges sont constituées par des enroulements de moteur électrique assurant l'entraînement de ventilateurs pour la régulation thermique de radiateurs d'automobiles.

## Patentansprüche

1. Antriebsvorrichtung einer bekannten Art für die aufeinanderfolgende Inbetriebnahme von Lasten beim Auftreten von Ereignissen, die mit vorbestimmten Prioritäten verbunden sind, die folgendes aufweist:
einen elektrischen Speisestromkreis mit zwei Anschlußklemmen (10, 11),
mehrere Meßfühler (30, 31, 32), die jeweils auf eines der festzustellenden Ereignisse ansprechen,
einen Unterbrecher (50), der von einem der zugeordneten Meßfühler (30) umgeschaltet wird, wenn ein Ereignis geringerer Priorität festgestellt wird, und
mindestens einen Umschalter (60) mit einem Einlaß (61) und zwei Auslässen (62, 63), dessen Einlaß in Ruhestellung an einen ersten Auslaß (63) und in Betriebsstellung an den zweiten Auslaß (62) angeschlossen ist, dessen Zustand im Übergang von der Ruhestellung in die Betriebsstellung von einem der Meßfühler bei der Feststellung eines entsprechenden Ereignisses umgeschaltet wird,
**dadurch gekennzeichnet, daß** sie N Meßfühler für die Inbetriebnahme von N Lasten ohne Überschneidung aufweist,
daß eine erste Last (20) zwischen einer ersten Anschlußklemme (51) des Unterbrechers (50) und einer ersten Anschlußklemme (10) des Versorgungskreises angeschlossen ist, und
daß der Unterbrecher (50) in Ruhestellung offen und dafür ausgelegt ist, bei Feststellung des Ereignisses mit der geringsten Priorität durch den entsprechenden Meßfühler (30) für die Inbetriebnahme der entsprechenden ersten Last (20) geschlossen zu werden, und daß sie N-1 Umschalter (60) aufweist, deren Zustand im Übergang aus der Ruhestellung in die Betriebsstellung durch die N-1 anderen Meßfühler (31, 32) bei Feststellung entsprechender Ereignissse umgeschaltet werden,
wobei die Verbindung der N-1 Umschalter so beschaffen ist, daß

. jede einem Umschalter (60) zugeordnete Last (21, 22) zwischen dem zweiten Auslaß (62) dieses Umschalters und der ersten Anschlußklemme (10) des Versorgungskreises angeschlossen ist,

. wobei der erste Auslaß (63A) des dem das Ereignis zweiter Priorität feststellenden Meßfühlers (31) zugeordneten Umschalters (60A) an die zweite Anschlußklemme (52) des Unterbrechers (50) angeschlossen ist, während der erste Auslaß (63B) des dem ein Ereignis höherer Priorität, soweit vorhanden, feststellenden Meßfühlers (32) an den Einlaß (61) des einem ein Ereignis geringerer Priorität feststellenden Meßfühlers (32) zugeordneten Umschalters angeschlossen ist, und daß

. der Einlaß (61B) des dem ein Ereignis höherer Priorität feststellenden Meßfühlers (32) zugeordnete Umschalter (60B) an den zweiten (der weitere Text ist aus dem Original nicht ersichtlich. Anmerkung des Übersetzers).

2. Antriebsvorrichtung nach Anspruch 1,
**dadurch gekennzeichnet, daß** mindestens einige der Meßfühler (30, 31, 32) aus wärmeempfindlichen gebauchten Scheiben bestehen.

3. Antriebsvorrichtung nach einem der Ansprüche 1 oder 2, **dadurch gekennzeichnet, daß** die Meßfühler (30, 31, 32) aus gebauchten Scheiben hergestellt sind, die den Unterbrecher (50) und die N-1 Umschalter (60) über konzentrische Kolben (40, 41) steuern.

4. Antriebsvorrichtung nach einem der Ansprüche 1 bis 3, **dadurch gekennzeichnet, daß** die Lasten (20, 21, 22) durch die Wicklung von elektrischen Motoren gebildet werden.

5. Antriebsvorrichtung nach einem der Ansprüche 1 bis 4 für die aufeinanderfolgende Inbetriebnahme von zwei Lasten (20, 21) bei Auftreten von zwei jeweils verbundenen Ereignissen,
**dadurch gekennzeichnet, daß** sie folgendes aufweist:

- einen elektrischen Speisestromkreis mit zwei Anschlußklemmen (10, 11),

- zwei Meßfühler (30, 31), die auf eines der auftretenden Ereignisse ansprechen,
- einen in Ruhestellung offenen Unterbrecher (50), der geschlossen wird, wenn ein Ereignis geringerer Priorität von einem der zugeordneten Meßfühler (30)
  .. festgestellt wird, um die entsprechende erste Last
  .. (20) in Betrieb zu nehmen, die an eine erste Anschlußklemme (51) des Unterbrechers und an eine erste Anschlußklemme (10) des Versorgungskreises
  .. angeschlossen ist,
- einen Umschalter (60) mit einem Einlaß (61) und zwei Auslässen (62, 63), dessen Einlaß in Ruhestellung an einen ersten Auslaß (63) und in Betriebsstellung an einen zweiten Auslaß (62) angeschlossen ist, wobei der Umschalter (60) beim Übergang aus der Ruhestellung in die Betriebsstellung durch den zweiten Meßfühler (31) bei Feststellung eines Ereignisses sekundärer Priorität umgeschaltet wird, wobei
der Anschluß des Umschalters (60) so beschaffen ist, daß
- die zweite Last (21) zwischen dem zweiten Auslaß des Umschalters (62) und der ersten Anschlußklemme (10) des Versorgungskreises angeschlossen ist,
- der erste Auslaß (63) des Umschalters (60) an die zweite Anschlußklemme (52) des Unterbrechers (50) angeschlossen ist, und
- der Einlaß (61) des Umschalters (60) an die zweite Anschlußklemme des Versorgungskreises angeschlossen ist.

6. Antriebsvorrichtung nach einem der Ansprüche 1 bis 4 für die aufeinanderfolgende Inbetriebnahme von zwei Wicklungen eines elektrischen Motors bei Auftreten von jeweils zwei zugeordneten Temperaturen, **dadurch gekennzeichnet, daß** sie folgendes aufweist:
- einen elektrischen Speisestromkreis mit zwei Anschlußklemmen (10, 11),
- zwei gebauchte Scheiben (30, 31), die jeweils auf eine der Temperaturen ansprechen,
- einen Unterbrecher (50), der in Ruhestellung offen ist und bei Feststellung der ersten Temperatur durch eine erste gebauchte Scheibe (30) für die Inbetriebnahme des entsprechenden ersten Motors (20) geschlossen wird, der zwischen einer ersten Anschlußklemme (51) des Unterbrechers und einer ersten Anschlußklemme (10) des Versorgungskreises angeschlossen ist,
- einen Umschalter (60) mit einem Einlaß (61) und zwei Auslässen (62, 63), dessen erster Einlaß (61) in Ruhestellung an einen ersten Auslaß (63) und in Betriebsstellung an einen zweiten Auslaß (62) angeschlossen ist, wobei der Umschalter (60) beim Übergang aus der Ruhestellung in die Betriebsstellung durch die zweite gebauchte Scheibe (31) bei Feststellung der entsprechenden Temperatur umgeschaltet wird, wobei der Anschluß des Umschalters (60) so beschaffen ist, daß der zweite Motor (21) zwischen dem zweiten Auslaß (62) des Umschalters und der ersten Anschlußklemme (10) des Versorgungskreises angeschlossen ist und der erste Auslaß (63) des Umschalters an die zweiste Anschlußklemme (52) des Unterbrechers und der Einlaß (61) des Umschalters (60) an die zweite Anschlußklemme (11) des Versorgungskreises angeschlossen ist.

7. Antriebsvorrichtung nach einem der Ansprüche 1 bis 4 für die aufeinanderfolgende Inbetriebnahme von drei Lasten bei Auftreten von jeweils drei entsprechenden Ereignissen, **dadurch gekennzeichnet, daß** sie folgendes aufweist:
- einen elektrischen Speisestromkreis mit zwei Anschlußklemmen (10, 11),
drei Meßfühler (30, 31, 32), die jeweils auf eines der Ereignisse ansprechen;
einen Unterbrecher (50), der in Ruhestellung offen ist und der bei Feststellung des Ereignisses mit der geringsten Priorität durch einen zugeordneten ersten Meßfühler (30) für die Inbetriebnahme der ersten Last (20) geschlossen wird, die zwischen einer ersten Anschlußklemme (51) des Unterbrechers (50) und einer ersten Anschlußklemme (10) des Speisekreises angeschlossen ist;
- zwei Umschalter (60A, 60B) mit einem Einlaß und zwei Auslässen, deren Einlaß (61A, 61B) in Ruhestellung an einen ersten Auslaß (63A, 63B) und in Betriebsstellung an einen zweiten Auslaß (62A, 62B) angeschlossen ist,, wobei jeder Umschalter (60A, 60B) aus der Ruhestellung in die Betriebsstellung durch einen jeweiligen Meßfühler (31, 32) umgeschaltet wird, wenn ein Ereignis zweiter oder dritter Priorität festgestellt wird, wobei - der Anschluß der Umschalter so beschaffen ist, daß:
- jede mit einem Umschalter (60A, 60B) verbundene Last (21, 22) zwischen dem zweiten Auslaß (62A, 62B) dieses Umschalters und der ersten Anschlußklemme (10) des Speisekreises angeschlossen ist, der erste Auslaß (63A) des mit dem Meßfühler (31 der das Ereignis zweiter Priorität feststellt, verbundene Umschalter (60A) an die zweite Anschlußklemme (52) des Unterbrechers angeschlossen ist,

- während der erste Auslaß (63B) des mit dem Meßfühler (32), der das Ereignis dritter Priorität feststellt, verbundene Umschalter (60B) an den Einlaß (61A) des Umschalters (60A) angeschlossen ist, der dem Meßfühler (31) zugeordnet ist, der das Ereignis geringerer Priorität feststellt, und daß

- der Einlaß (61B) des dem Meßfühler (32), der das Ereignis dritter Priorität feststellt, zugeordnete Umschalter (60B) an die zweite Anschlußklemme (11) des Speisekreises angeschlossen ist.

8. Antriebsvorrichtung nach einem der Ansprüche 1 bis 7,
**dadurch gekennzeichnet, daß** die N Meßfühler, der Unterbrecher und die N-1 Umschalter in einem gemeinsamen Gehäuse untergebracht sind.

9. Antriebsvorrichtung nach einem der Ansprüche 1 bis 8,
**dadurch gekennzeichnet, daß** die N Lasten durch die Wicklungen eines elektrischen Motors gebildet werden, welche für den Antrieb von Ventilatoren für die Wärmeregulierung von Heizungen von Kraftfahrzeugen sorgen.

**Claims**

1. Control device for successive actuations of several loads, when associated events with ordered priorities occur, of a known type comprising

- an electrical power supply circuit with two terminals (10, 11),
- several sensing devices (30, 31, 32) sensitive respectively to one of the events to be detected,
- a circuit-breaking switch (50) switched by an associated sensing device (30) when an event with a lower priority is detected, and
- at least one change-over switch (60) with one input (61) and two outputs (62, 63), the input of which is connected to a first output (63) in the inoperative position and to the second output (62) in the operative position, the state of which is switched from the inoperative position to the operative position by a sensing device when an associated event is detected,

characterised by the fact that:

- it comprises n sensing devices for actuating n loads, without overlap,
- a first load (20) is connected between a first terminal (51) of the circuit-breaking switch (50) and a first terminal (10) of the power supply,
- the circuit-breaking switch (50) is open in the inoperative position and arranged to be closed when the event of the lowest priority is detected by the associated sensing device (30) so as to actuate the said first corresponding load (20),
- it comprises n-1 change-over switches (60), the state of which is switched from the inoperative position to the operative position by the other n-1 sensing devices (31, 32) when respectively associated events are detected,
- the connection of the n-1 change-over switches being such that
    . each load (21, 22) associated with a change-over switch (60) is connected between the second output (62) of this change-over switch and the first terminal (10) of the power supply,
    . the first output (63A) of the change-over switch (60A) associated with the sensing device (31) detecting the second-priority event is connected to the second terminal (52) of the circuit-breaking switch (50), whilst the first output (63B) of each change-over switch (60B) associated with a sensing device (32) detecting an event with a greater priority, if such exists, is connected to the input (61) of the change-over switch associated with the sensing device detecting the event with a respectively lower priority, and such that
    . the input (61B) of the change-over switch (60B) associated with the sensing device (32) detecting the event with greater priority is connected to the second power supply terminal.

2. Control device according to Claim 1, characterised by the fact that at least some of the sensing devices (30, 31, 32) are formed by heat-sensitive snap-action washers.

3. Control device according to one of Claims 1 or 2, characterised by the fact that the sensing devices (30, 31, 32) are formed by snap-action washers which control the circuit-breaking switch (50) and the n-1 change-over switches (60) by means of respective concentric pistons (40, 41).

4. Control device according to one of Claims 1 to 3, characterised by the fact that the loads (20, 21, 22) are formed by electric motor windings.

5. Control device according to one of Claims 1 to 4 for the successive actuation of two loads (20, 21) when two respectively associated events occur, characterised by the fact that it comprises:
- an electrical power supply circuit with two terminals (10, 11),
- two sensing devices (30, 31) sensitive respectively to one of the events,
- a switch (50) open in the inoperative position and arranged to be closed when the lower-priority event is detected by a first associated sensing device (30), for actuating the first corresponding load (20) connected between a first terminal (51) of the circuit-breaking switch and a first terminal (10) of the power supply,
- a change-over switch (60) with one input (61) and two outputs (62, 63), the input of which is connected to a first output (63) in the inoperative position and to the second output (62) in the operative position, the change-over switch (60) being switched from the inoperative position to the operative position by the second sensing device (31) when a second-priority event is detected,
- the connection of the change-over switch (60) being such that:
  . the second load (21) is connected between the second output of the change-over switch (62) and the first terminal (10) of the power supply,
  . the first output (63) of the change-over switch (60) is connected to the second terminal (52) of the circuit-breaking switch (50), and
  . the input (61) of the change-over switch (60) is connected to the second terminal (11) of the power supply.

6. Control device according to one of Claims 1 to 4 for the successive actuation of two electric motor windings when two respectively associated temperatures occur, characterised by the fact that it comprises:
- an electrical power supply circuit with two terminals (10, 11),
- two snap-action washers (30, 31) sensitive respectively to one of the two temperatures,
- a circuit-breaking switch (50) open in the inoperative position and arranged to be closed when the first temperature is detected by a first snap-action washer (30), for actuating the first corresponding motor (20) connected between a first terminal (51) of the circuit-breaking switch and a first terminal (10) of the power supply,

- a change-over switch (60) with one input (61) and two outputs (62, 63), the input (61) of which is connected to a first output (63) in the inoperative position, and to the second output (62) in the operative position, the change-over switch (60) being switched from the inoperative position to the operative position by the second snap-action washer (31) when the associated temperature is detected, the connection of the change-over switch (60) being such that the second motor (21) is connected between the second output (62) of the change-over switch and the first terminal (10) of the power supply, the first output (63) of the change-over switch is connected to the second terminal (52) of the circuit-breaking switch and the input (61) of the change-over switch (60) is connected to the second terminal (11) of the power supply.

7. Control device according to one of Claims 1 to 4, for the successive actuation of three loads when three respectively associated events occur, characterised by the fact that it comprises:
- an electrical power supply circuit with two terminals (10, 11),
- three sensing devices (30, 31, 32) sensitive respectively to one of the events,
- a circuit-breaking switch (50) open in the inoperative position and arranged so as to be closed when the event of the lowest priority is detected by a first associated sensing device (30), for actuating the first load (20) connected between a first terminal (51) of the circuit-breaking switch (50) and a first terminal (10) of the power supply,
- two change-over switches (60A, 60B) with one input and two outputs, the inputs (61A, 61B) of which are connected to a first output (63A, 63B) in the inoperative position and to the second output (62A, 62B) in the operative position, each change-over switch (60A, 60B) being switched from the inoperative position to the operative position by a respectively associated sensing device (31, 32) when a respective second and third-priority event is detected,
- the connection of the change-over switches being such that:
  . each load (21, 22) associated with a change-over switch (60B, 60B) is connected between the second output (62A, 62b) of this change-over switch and the first terminal (10) of the power supply,
  . the first output (63A) of the change-over switch (60A) associated with the sensing device (31) detecting the second-priority event is connected to the second terminal (52) of the circuit-breaking switch,

. whilst the first output (63B) of the change-over switch (60B) associated with the sensing device (32) detecting the third-priority event is connected to the input (61A) of the change-over switch (60A) associated with the sensing device (31) detecting the lower-priority event, and that

. the input (61B) of the change-over switch (60B) associated with the sensing device (32) detecting the third-priority event is connected to the second terminal (11) of the power supply.

8. Control device according to one of Claims 1 to 7, characterised by the fact that the n sensing devices, the circuit-breaking switch and the n-1 change-over switches are housed in a single box.

9. Control device according to one of Claims 1 to 8, characterised by the fact that the n loads consist of electric motor windings driving fans for the thermal regulation of motor vehicle radiators.

FIG_1

FIG_2

FIG_3

EP 0 333 571 B1

FIG 4

FIG_5

13